# EUROPEAN PATENT APPLICATION

(11) **EP 4 429 085 A1**
(43) Date of publication of application: **11.09.2024**
(21) Application number: 23770259.2
(22) Date of filing: 17.02.2023
(51) Int. Cl.: H02K 11/225, H02K 29/12

(54) **VEHICLE DRIVE DEVICE**

(30) Priority: 14.03.2022 JP 2022039673
(71) Applicant: AISIN CORPORATION, Kariya-shi, Aichi 448-8650 (JP)
(72) Inventor: HOTTA Yutaka, Kariya-shi, Aichi 448-8650 (JP); SATO Ryota, Kariya-shi, Aichi 448-8650 (JP); KASUGAI Koji, Kariya-shi, Aichi 448-8650 (JP)
(74) Representative: Kramer Barske Schmidtchen Patentanwälte PartG mbB
(86) International application number: PCT/JP2023/005629
(87) International publication number: WO 2023/176300

(57) **Abstract**

A vehicle drive device is disclosed that includes: a rotating electrical machine including a rotor and a stator; an inverter device electrically connected to the rotating electrical machine; a control board configured to control the rotating electrical machine; a rotation angle sensor configured to acquire information on rotation of the rotor; and a case that houses the rotating electrical machine, the inverter device, and the control board in a common housing chamber. The rotation angle sensor includes a sensing unit mounted on the control board and a detection target portion provided on a shaft portion of the rotor.

## Description

### TECHNICAL FIELD

The present disclosure relates to vehicle drive devices.

### BACKGROUND ART

There is known a technique in which a detection target unit is provided on an axial end face and a detection element is provided on a control board at a position facing the detection target unit in order to form a rotation angle sensor that acquires information on rotation of a shaft portion of a rotor.

### Related Art Documents

### Patent Documents

Patent Document 1: Japanese Unexamined Patent Application Publication No. 2019-075960 (JP 2019-075960 A)

### SUMMARY OF THE INVENTION

### Problem to be Solved by the Invention

However, in such related art, a motor housing that houses a motor and a motor cover that houses the control board are provided, and a housing chamber formed by the motor housing and the motor cover is divided into two by a heat sink provided between the motor housing and the motor cover and provided with a bearing that supports the shaft portion. As a result, the axial size tends to increase due to the detection target unit being provided on the axial end face of the shaft portion of the rotor.

Accordingly, in one aspect, an object of the present disclosure is to efficiently dispose a rotation angle sensor in a case in a configuration in which a rotating electrical machine and an inverter device are housed in a common housing chamber of the case.

### Means for Solving the Problem

In one aspect, a vehicle drive device is provided that includes: a rotating electrical machine including a rotor and a stator;
an inverter device electrically connected to the rotating electrical machine;
a control board configured to control the rotating electrical machine;
a rotation angle sensor configured to acquire information on rotation of the rotor; and
a case that houses the rotating electrical machine, the inverter device, and the control board in a common housing chamber.

The rotation angle sensor includes a sensing unit mounted on the control board and a detection target unit provided on a shaft portion of the rotor.

### Effects of the Invention

In the one aspect, according to the present disclosure, it is possible to efficiently dispose the rotation angle sensor in the case in the configuration in which the rotating electrical machine and the inverter device are housed in the common housing chamber of the case.

### BRIEF DESCRIPTION OF THE DRAWINGS

[FIG. 1] FIG. 1 is a schematic diagram of an example of an electric circuit including a rotating electrical machine.
[FIG. 2] FIG. 2 is a skeleton diagram of a vehicle drive system including the rotating electrical machine.
[FIG. 3] FIG. 3 is a sectional view schematically showing a main part of a vehicle drive device according to an embodiment.
[FIG. 4A] FIG. 4A is a perspective view of a motor drive device according to the embodiment as viewed from an X1 side.
[FIG. 4B] FIG. 4B is a plan view schematically showing a control board according to the embodiment.
[FIG. 5] FIG. 5 is an enlarged view of a portion Q1 in FIG. 3.
[FIG. 6] FIG. 6 is a diagram showing the relationship between a sensor rotor and a sensing unit on the control board as viewed from an X2 side in an axial direction.
[FIG. 7] FIG. 7 is a diagram showing the state in which the sensor rotor in FIG. 5 is removed, as viewed from the X2 side in the axial direction.
[FIG. 8] FIG. 8 is an illustration of the configuration of a sensor coil and is an enlarged view of a portion Q2 in FIG. 7.
[FIG. 9] FIG. 9 is a diagram showing the relationship between the sensing unit and the sensor rotor of a rotation angle sensor according to the embodiment.
[FIG. 10] FIG. 10 is a diagram of a portion of the sensor rotor that faces the sensing unit in the axial direction according to the embodiment as viewed in the axial direction.
[FIG. 11] FIG. 11 is a schematic diagram illustrating a waveform of a sensor output (electrical signal) generated by the sensing unit according to the present example.
[FIG. 12] FIG. 12 is a sectional view schematically showing part of a vehicle drive device according to a modification.

### MODES FOR CARRYING OUT THE INVENTION

Embodiments will be described in detail below with reference to the accompanying drawings. The dimensional ratios in the drawings are merely illustrative, and are not limited to these. The shapes etc. in the drawings may be partially exaggerated for convenience of description.

Hereinafter, an electrical system (control system) of a vehicle drive device 10 of an embodiment and an overall drive system including the vehicle drive device 10 of the embodiment will first be briefly described, and then the vehicle drive device 10 of the embodiment will be described in detail.

### [Electrical System of Vehicle Drive Device]

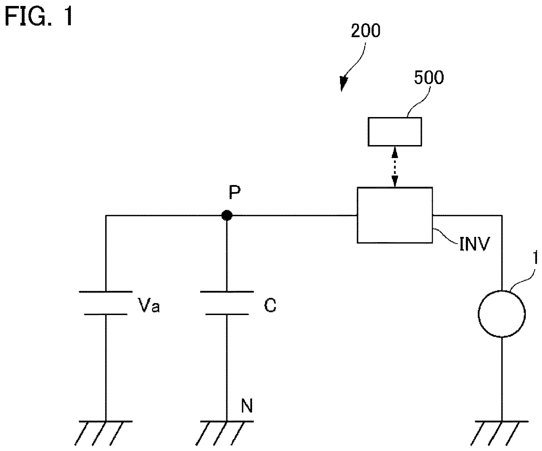

FIG. 1 is a schematic diagram of an example of an electric circuit 200 including a rotating electrical machine 1 according to the present embodiment. FIG. 1 also shows a control device 500. In FIG. 1, a dashed arrow shown for the control device 500 represents transfer of information (signals and data).

The rotating electrical machine 1 is driven through control on an inverter INV by the control device 500. In the electric circuit 200 shown in FIG. 1, the rotating electrical machine 1 is electrically connected to a power supply Va via the inverter INV. For example, the inverter INV includes, for each phase, power switching elements (e.g., MOSFETs: Metal-Oxide-Semiconductor Field Effect Transistors or IGBTs: Insulated Gate Bipolar Transistors) on the high potential side and low potential side of the power supply Va. The power switching element on the high potential side and the power switching element on the low potential side form upper and lower arms. The inverter INV may include a plurality of sets of upper and lower arms per phase. Each power switching element may be driven by PWM (Pulse Width Modulation) under the control of the control device 500 so that desired rotational torque is generated. The power supply Va is, for example, a battery with a relatively high rated voltage and may be, for example, a lithiumion battery, a fuel cell, etc.

In the present embodiment, like the electric circuit 200 shown in FIG. 1, a smoothing capacitor C is electrically connected in parallel with the inverter INV between the high potential side and low potential side of the power supply Va. A plurality of sets of smoothing capacitors C may be electrically connected in parallel with each other between the high potential side and low potential side of the power supply Va. A DC-DC converter may be provided between the power supply Va and the inverter INV.

### [Overall Drive System]

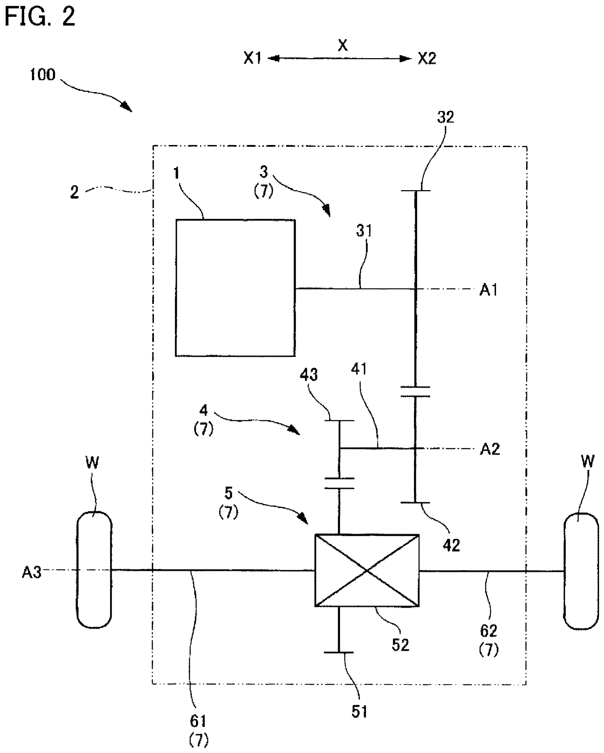

FIG. 2 is a skeleton diagram of a vehicle drive system 100 including the rotating electrical machine 1. An X direction and X1 and X2 sides in the X direction are defined in FIG. 2. The X direction is parallel to the direction of a first axis A1 (hereinafter also referred to as "axial direction").

In the example shown in FIG. 2, the vehicle drive system 100 includes the rotating electrical machine 1 serving as a driving source for wheels W, and a drive transmission mechanism 7 provided in a power transmission path connecting the rotating electrical machine 1 and the wheels W. The drive transmission mechanism 7 includes an input member 3, a counter gear mechanism 4, a differential gear mechanism 5, and left and right output members 61, 62.

The input member 3 includes an input shaft 31 and an input gear 32. The input shaft 31 is a rotating member that rotates about the first axis A1. The input gear 32 is a gear that transmits rotational torque (driving force) from the rotating electrical machine 1 to the counter gear mechanism 4. The input gear 32 is connected to the input shaft 31 of the input member 3 so as to rotate with the input shaft 31 of the input member 3.

The counter gear mechanism 4 is disposed between the input member 3 and the differential gear mechanism 5 in the power transmission path. The counter gear mechanism 4 includes a counter shaft 41, a first counter gear 42, and a second counter gear 43.

The counter shaft 41 is a rotating member that rotates about a second axis A2. The second axis A2 extends parallel to the first axis A1. The first counter gear 42 is an input element of the counter gear mechanism 4. The first counter gear 42 meshes with the input gear 32 of the input member 3. The first counter gear 42 is connected to the counter shaft 41 so as to rotate with the counter shaft 41.

The second counter gear 43 is an output element of the counter gear mechanism 4. In the present embodiment, the second counter gear 43 has, for example, a smaller diameter than the first counter gear 42. The second counter gear 43 is connected to the counter shaft 41 so as to rotate with the counter shaft 41.

The differential gear mechanism 5 is disposed on a third axis A3 serving as a rotation axis of the differential gear mechanism 5. The third axis A3 extends parallel to the first axis A1. The differential gear mechanism 5 distributes the driving force transmitted from the rotating electrical machine 1 side to the left and right output members 61, 62. The differential gear mechanism 5 includes a differential input gear 51, and the differential input gear 51 meshes with the second counter gear 43 of the counter gear mechanism 4. The differential gear mechanism 5 includes a differential case 52, and the differential case 52 houses a pinion shaft, pinion gears, left and right side gears, etc. The left and right side gears are connected to the left and right output members 61, 62 so as to rotate with the left and right output members 61, 62, respectively.

The left and right output members 61, 62 are drivingly connected to the left and right wheels W, respectively. Each of the left and right output members 61, 62 transmits the driving force distributed by the differential gear mechanism 5 to the wheel W. The left and right output members 61, 62 may be each composed of two or more members.

The rotating electrical machine 1 thus drives the wheels W via the drive transmission mechanism 7. In another embodiment, the rotating electrical machine 1 may be disposed inside a wheel as a wheel-in motor. In this case, the vehicle drive system 100 may not include the drive transmission mechanism 7. In still another embodiment, a plurality of rotating electrical machines 1 that shares part or whole of the drive transmission mechanism 7 may be provided.

### [Details of Vehicle Drive Device]

The vehicle drive device 10 includes the rotating electrical machine 1 described above, a case 2, and a motor drive device 8.

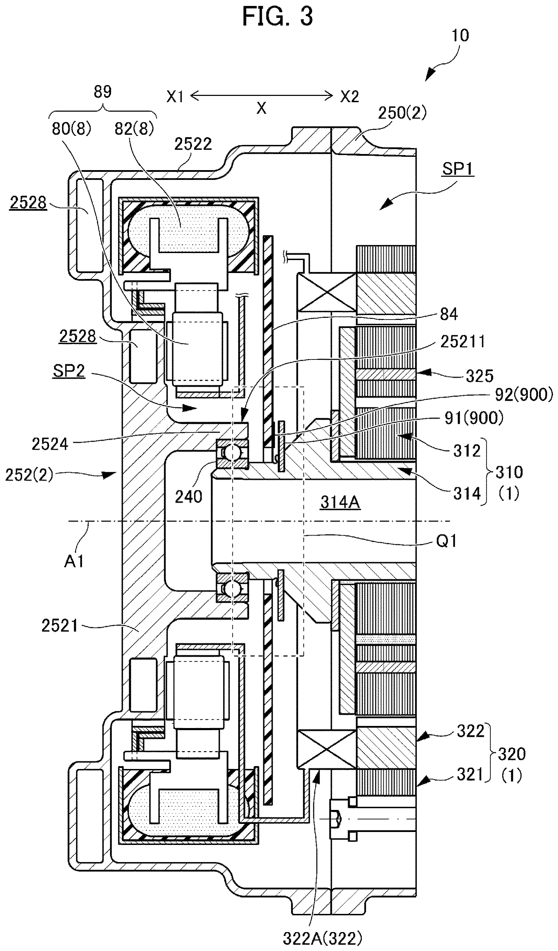

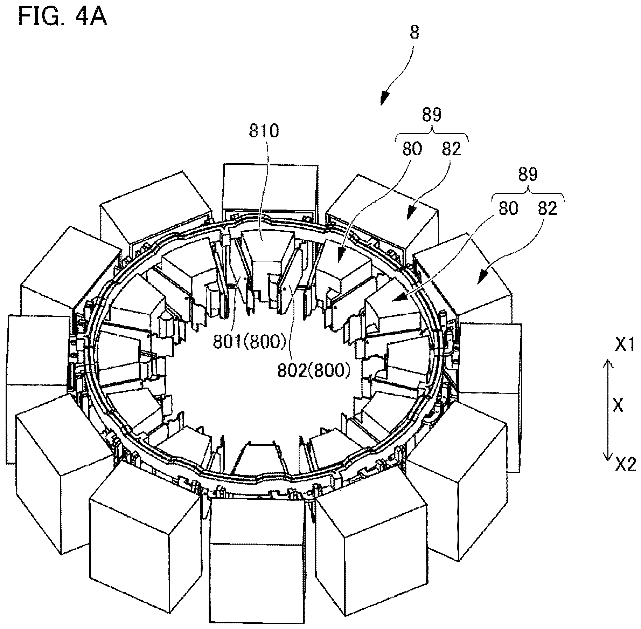

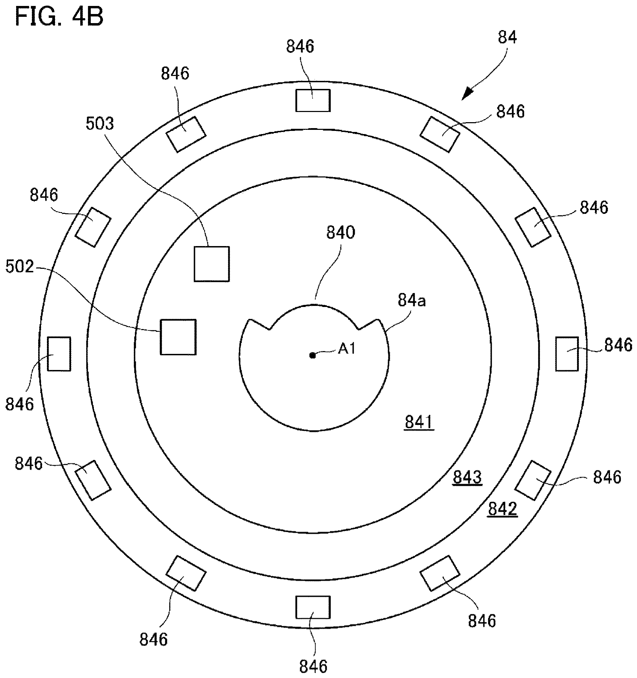

FIG. 3 is a sectional view schematically showing a main part of the vehicle drive device 10 according to the present embodiment. FIG. 3 is a sectional view taken along a plane including the first axis A1 that is a rotation axis of the rotating electrical machine 1, and shows a part on one axial end side (X 1 side) of the rotating electrical machine 1. FIG. 4A is a perspective view of the motor drive device 8 as viewed from the X1 side. FIG. 4B is a plan view schematically showing a control board 84. The control board 84 of the motor drive device 8 is not shown in FIG. 4A. In the following description, the axial direction refers to a direction in which the first axis A1 that is the rotation axis of the rotating electrical machine 1 extends, and the radial direction refers to a radial direction about the first axis A1, unless otherwise specified. Therefore, the "radially outer side" and "radially outward" refer to a side away from the first axis A1, and the "radially inner side" and "radially inward" refer to a side toward the first axis A1. The circumferential direction corresponds to a rotation direction about the first axis A1. As in FIG. 2, the X direction and the X1 and X2 sides in the X direction are defined in FIG. 3. In the following description, the terms "X1 side" and "X2 side" may be used to describe relative positional relationships.

The vehicle drive device 10 is mounted on a vehicle as part of the vehicle drive system 100, and generates a driving force that causes the vehicle to move forward or backward. The vehicle may be in any form. For example, the vehicle may be a fourwheeled automobile, or may be a bus, a truck, a two-wheeled vehicle, or construction equipment. The vehicle drive device 10 may be mounted on the vehicle together with another driving source (e.g., an internal combustion engine).

The rotating electrical machine 1 includes a rotor 310 and a stator 320. The rotating electrical machine 1 is of an inner rotor type, and the stator 320 is provided so as to surround the radially outer side of the rotor 310. That is, the rotor 310 is disposed radially inward of the stator 320.

### The rotor 310 includes a rotor core 312 and a shaft portion 314.

The rotor core 312 may be made of, for example, annular magnetic steel laminations. Permanent magnets 325 may be embedded in the rotor core 312. Alternatively, the permanent magnets 325 may be attached to the outer peripheral surface of the rotor core 312. The permanent magnets 325 may be arranged as desired. The rotor core 312 is fixed to the outer peripheral surface of the shaft portion 314 and rotates with the shaft portion 314.

The shaft portion 314 defines the first axis A1 that is the rotation axis of the rotating electrical machine 1. The shaft portion 314 is rotatably supported by a cover member 252 (described later) of the case 2 via a bearing 240 at a position on the X1 side with respect to a part of the shaft portion 314 to which the rotor core 312 is fixed. The shaft portion 314 is rotatably supported by the case 2 via a bearing (not shown) corresponding to the bearing 240 at a position on the other axial end side (X2 side) of the rotating electrical machine 1. The shaft portion 314 may be rotatably supported by the case 2 at both axial ends in this manner.

The shaft portion 314 is in the form of, for example, a hollow pipe and has a hollow interior 314A. The hollow interior 314A may extend along the entire axial length of the shaft portion 314. The hollow interior 314A can function as an axial oil passage. In this case, the shaft portion 314 may have an oil hole for discharging oil to a coil end portion 322A of the stator 320 etc.

The shaft portion 314 is provided with, on the X1 side of its part to which the rotor core 312 is fixed, a sensor rotor 91 of a rotation angle sensor 900 for acquiring rotation angle information of the rotor 310. A preferred example of the rotation angle sensor 900 will be described later. In a modification, the rotation angle sensor 900 may be, for example, a resolver or a rotary encoder using a sensor element such as a Hall element or a magnetoresistive element.

### The stator 320 includes a stator core 321 and a stator coil 322.

For example, the stator core 321 is made of annular magnetic steel laminations. Teeth (not shown) protruding radially inward are formed in a radial pattern in an inner peripheral portion of the stator core 321.

The stator coil 322 may be, for example, a conductor having a rectangular cross section or a circular cross section and coated with an insulating coating. The stator coil 322 is wound around the teeth (not shown) of the stator core 321. For example, the stator coil 322 may be electrically connected by star connection or by delta connection in one or more parallel relationships.

The stator coil 322 includes the coil end portion 322A that is a portion protruding axially outward from slots of the stator core 321.

The case 2 may be made of, for example, aluminum. The case 2 can be formed by casting etc. The case 2 includes a motor case 250 and the cover member 252. The case 2 houses the rotating electrical machine 1 and the motor drive device 8. In the case of the vehicle drive system 100 shown in FIG. 2, the case 2 may further house the drive transmission mechanism 7 as schematically shown in FIG. 2.

The motor case 250 forms a motor housing chamber SP1 that houses the rotating electrical machine 1. The motor housing chamber SP1 may be an oil-tight space containing oil for cooling and/or lubricating the rotating electrical machine 1 (and/or the drive transmission mechanism 7). The motor case 250 is in such a form that it includes a peripheral wall portion that surrounds the radially outer side of the rotating electrical machine 1. The motor case 250 may be implemented by connecting a plurality of members. The motor case 250 may be integral with another case member that houses the drive transmission mechanism 7 on the other axial end side (X2 side).

The cover member 252 is connected to one axial end side (X1 side) of the motor case 250. The cover member 252 is in the form of a cover that covers one axial end side (X1 side) of the motor housing chamber SP1. In this case, the cover member 252 may cover the opening on the one axial end side (X1 side) of the motor case 250 so as to completely or substantially completely close this opening.

The cover member 252 forms an inverter housing chamber SP2 that houses the motor drive device 8. Part of the inverter housing chamber SP2 may be formed by the motor case 250, and part of the motor housing chamber SP1 may be formed by the cover member 252.

The cover member 252 supports the motor drive device 8. For example, the motor drive device 8 may be in the form of modules describe later and attached to the cover member 252. This allows the cover member 252 and the motor case 250 to be connected after part or whole of the motor drive device 8 is attached to the cover member 252, which improves ease of attachment of the motor drive device 8.

The cover member 252 is provided with the bearing 240 that rotatably supports the rotor 310. That is, the cover member 252 includes a bearing support portion 2524 that supports the bearing 240. The bearing support portion 2524 refers to the entire axial range of the portion of the cover member 252 in which the bearing 240 is provided. As described above, in the present embodiment, the cover member 252 is connected to the end on the X1 side of the motor case 250 in the axial direction, faces the rotating electrical machine 1 in the axial direction, and includes the bearing support portion 2524 that rotatably supports the rotor 310.

As shown in FIG. 3, the bearing 240 is provided radially outward of the end on the X1 side of the shaft portion 314. Specifically, the radially outer side of an outer race of the bearing 240 is supported by the cover member 252, and the radially inner side of an inner race of the bearing 240 is supported by the outer peripheral surface of the shaft portion 314. In a modification, the radially inner side of the inner race of the bearing 240 may be supported by the cover member 252, and the radially outer side of the outer race of the bearing 240 may be supported by the inner peripheral surface of the shaft portion 314.

In the present embodiment, as shown in FIG. 3, the cover member 252 includes an annular bottom portion 2521 centered on the first axis A1, and a peripheral wall portion 2522 protruding from the outer peripheral edge of the bottom portion 2521 toward the other axial end side (X2 side). The bottom portion 2521 and the peripheral wall portion 2522 define the inverter housing chamber SP2. A cylindrical portion 25211 protruding toward the other axial end side (X2 side) is formed in the central portion (portion centered on the first axis A1) on the other axial end side (X2 side) of the bottom portion 2521. The bearing support portion 2524 is set in the cylindrical portion 25211. The cylindrical portion 25211 is formed concentrically about the first axis A1.

The inverter housing chamber SP2 may be a space, and is preferably sealed with a resin containing a relatively highly thermally conductive filler. In this case, a resin molded portion may also function to fix the motor drive device 8, which will be described later, to the cover member 252.

The cover member 252 is preferably made of a relatively highly thermally conductive material (e.g., aluminum), and has a coolant channel 2528 inside. Water as a coolant flows through the coolant channel 2528. The water may be water containing, for example, an LLC (Long Life Coolant). In this case, the coolant flowing through the coolant channel 2528 can be kept at a relatively low temperature as it dissipates heat through a radiator (not shown) mounted on the vehicle. When the coolant flows through the coolant channel 2528 of the cover member 252, the coolant takes away the heat of the cover member 252 to cool the cover member 252. The cover member 252 can thus have a function to cool the motor drive device 8 disposed adjacent to the cover member 252 in the axial direction. That is, the coolant takes away the heat from the motor drive device 8 via the cover member 252, so that cooling of the motor drive device 8 is facilitated. In a modification, another cooling medium (e.g., oil) may be used instead of the coolant.

The coolant channel 2528 may have any shape as viewed in the axial direction, such as an annular shape, a spiral shape, or a shape in which the coolant channel 2528 extends along the circumferential direction while meandering radially outward and inward. Fins etc. may be formed in the coolant channel 2528. When the cover member 252 is manufactured using a core etc., the shape of the coolant channel 2528 etc. can be designed with greater flexibility.

The motor drive device 8 includes a power module 80, a capacitor module 82, and the control board 84.

In the present embodiment, as shown in FIG. 4A, a plurality of sets of the power module 80 and the capacitor module 82 (12 sets in the example shown in FIG. 4A) is arranged in the circumferential direction. The number of sets of the power module 80 and the capacitor module 82 is changed according to the specifications of the rotating electrical machine 1. Basically, the power of the rotating electrical machine 1 increases as the number of sets of the power module 80 and the capacitor module 82 increases. Therefore, a plurality of variations with different numbers of sets of the power module 80 and the capacitor module 82 can be set when designing the rotating electrical machine 1.

Each of the plurality of sets of the power module 80 and the capacitor module 82 is preferably in the form of an integrated assembly. That is, each set of the power module 80 and the capacitor module 82 forms an integrated block assembly 89.

In the block assemblies 89, the power modules 80 have the same configuration and the capacitor modules 82 have the same configuration (electrical characteristics, shape, etc.). Therefore, individual replacement and maintenance of the block assemblies 89 can be performed, which can increase versatility. In the present embodiment, the power module 80 of each block assembly 89 includes a submodule 800 and a heat dissipation member 810.

Each submodule 800 forms the upper and lower arms of one phase in the inverter INV (see FIG. 1).

The heat dissipation member 810 is made of a relatively highly thermally conductive material (e.g., aluminum). In the present embodiment, the heat dissipation member 810 is in the form of a solid block. This can efficiently increase the heat capacity of the heat dissipation member 810.

The control board 84 forms part or whole of the control device 500 (see FIG. 1). The control board 84 may be, for example, a multilayer printed circuit board. The control board 84 is disposed in such an orientation that the direction normal to the board surface coincides with the axial direction. This allows the control board 84 to be disposed using a small axial gap. For example, in the present embodiment, as shown in FIG. 3, the control board 84 may be disposed between the rotating electrical machine 1 and the block assemblies 89 in the axial direction. More specifically, the control board 84 may be disposed between the coil end portion 322A of the rotating electrical machine 1 and the power modules 80 and capacitor modules 82 in the axial direction. Efficient placement using a space that tends to be a dead space can thus be implemented. The control board 84 can extend radially outward to such a radial position that the control board 84 overlaps the coil end portion 322A as viewed in the axial direction. This can maximize the area of the control board 84 (range in which a circuit unit is formed).

As shown in FIG. 4B, the control board 84 preferably has an annular shape with a central hole 84a through which the shaft portion 314 of the rotor 310 (see also FIG. 3) passes. In this case, the control board 84 can be disposed near all of the plurality of power modules 80 arranged in the circumferential direction. This facilitates electrical connection (not shown) between each of power semiconductor chips 801, 802 (see FIG. 4A) (e.g., gate terminals of the power switching elements) forming the submodule 800 of the power module 80 and a drive circuit 846 (see FIG. 4B) of the control board 84.

As shown in FIG. 4B, the control board 84 has an annular low-voltage area 841 around the central hole 84a and an annular high-voltage area 842 located radially outward of the low-voltage area 841. The high-voltage area 842 and the low-voltage area 841 are electrically insulated via an annular insulating area 843. This allows a low-voltage circuit and a high-voltage circuit to be located together in the two annular areas (low-voltage area 841 and high-voltage area 842) of the control board 84. Circuit units and elements that handle a high voltage of the power supply Va are disposed in the high-voltage area 842 of the control board 84. For example, the drive circuits 846 for driving the power semiconductor chips 801, 802 may be provided as high-voltage electronic components in the high-voltage area 842. A microcomputer 502, a power supply circuit 503, etc. that implement the control device 500 may be provided as low-voltage electronic components in the low-voltage area 841. An electronic component for an electric oil pump that circulates oil in the motor housing chamber SP1 may be mounted on the control board 84.

As described above, according to the present embodiment, the motor drive device 8 is disposed between the cover member 252 and the rotating electrical machine 1. This can reduce the overall size of the vehicle drive device 10 compared to a comparative example (not shown) in which a motor drive device is mounted outside a motor case.

In particular, according to the present embodiment, the axial size of the vehicle drive device 10 can be reduced by providing the cover member 252 with the bearing support portion 2524 and disposing the motor drive device 8 between the cover member 252 and the rotating electrical machine 1 in the axial direction. Specifically, when the motor drive device 8 is provided on the X1 side with respect to the cover member 252 in the axial direction, a separate cover member is required to cover the X1 side of the motor drive device 8. This tends to increase the axial size of the vehicle drive device 10 accordingly. In this regard, according to the present embodiment, the cover member 252 can function as a cover on the X1 side not only for the rotating electrical machine 1 but also for the motor drive device 8. The axial size of the vehicle drive device 10 can therefore be reduced.

In the present embodiment, the bearing support portion 2524 of the cover member 252 is disposed radially inward of the motor drive device 8 (power modules 80, capacitor modules 82, etc.) as viewed in the axial direction, and overlaps the motor drive device 8 as viewed in the radial direction. The motor drive device 8 can thus be disposed between the cover member 252 and the rotating electrical machine 1 in the axial direction, which can further effectively reduce the axial size of the vehicle drive device 10.

According to the present embodiment, a bracket having a bearing support portion equivalent to the bearing support portion 2524 is not provided between the motor drive device 8 and the rotating electrical machine 1 in the axial direction. This can reduce the number of components and the axial distance between the motor drive device 8 and the rotating electrical machine 1 compared to the configuration in which such a bracket is provided. The axial size of the vehicle drive device 10 can thus be reduced as described above. Since there is no wall portion (bracket) separating the motor drive device 8 and the rotating electrical machine 1 in the axial direction, the wiring length between the motor drive device 8 and the rotating electrical machine 1 can be reduced, which can increase the wiring efficiency between the motor drive device 8 and the rotating electrical machine 1.

According to the present embodiment, when the coolant channel 2528 is formed in the cover member 252, the cover member 252 can be thermally connected to (connected so that it can conduct heat to) the motor drive device 8. That is, the motor drive device 8 can be cooled by the coolant in the coolant channel 2528 via the cover member 252. Since the coolant can stably flow through the coolant channel 2528, the cooling of the motor drive device 8 can be stabilized. When the flow rate of the coolant is controllable, the cooling can be optimized according to the state of the motor drive device 8.

According to the present embodiment, since the axial distance between the motor drive device 8 and the rotating electrical machine 1 is reduced, not only the motor drive device 8 but also part of the rotating electrical machine 1 can be cooled by the cover member 252 (cover member 252 with the coolant channel 2528).

In the present embodiment, the capacitor modules 82 are disposed on the X1 side with respect to the control board 84. With such a configuration, it is possible to increase the diameter of the control board 84 (or dispose the control board 84 extending further radially outward). Specifically, as shown in FIG. 3, the control board 84 can be extended radially outward to such a position that the control board 84 overlaps the capacitor modules 82 as viewed in the axial direction or to a position radially outward of the capacitor modules 82. According to the present embodiment, the placement and size of the control board 84 can thus be designed with greater flexibility. In a modification, the ends on the X2 side of the capacitor modules 82 may be disposed so as to overlap the coil end portion 322A as viewed in the radial direction. In this case, it is possible to increase the axial size (capacity) of the capacitor modules 82 instead of increasing the diameter of the control board 84.

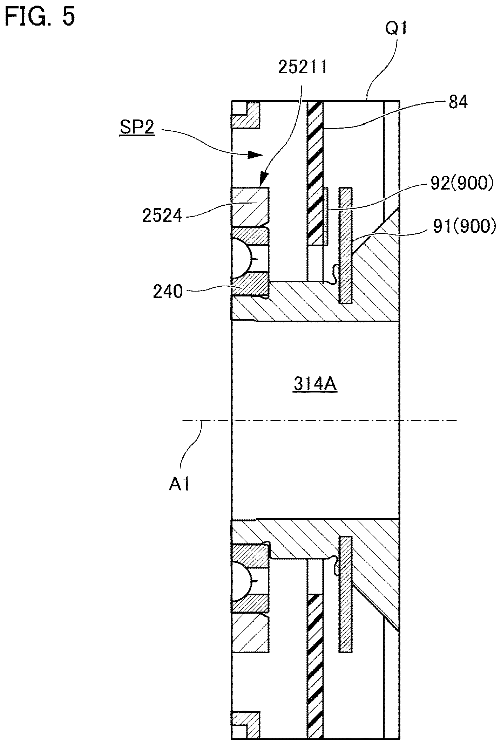

Next, a preferred configuration of the rotation angle sensor 900 according to the above embodiment will be described with reference to FIG. 5 and the subsequent figures.

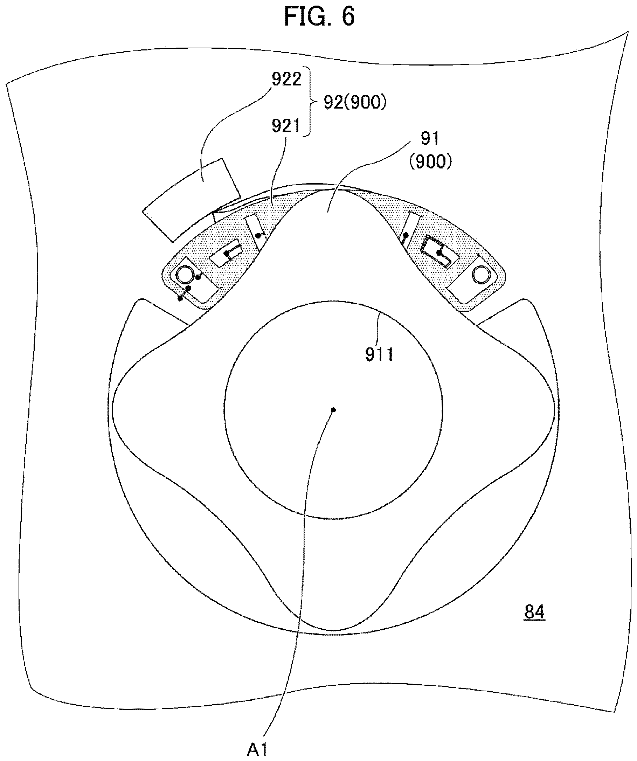

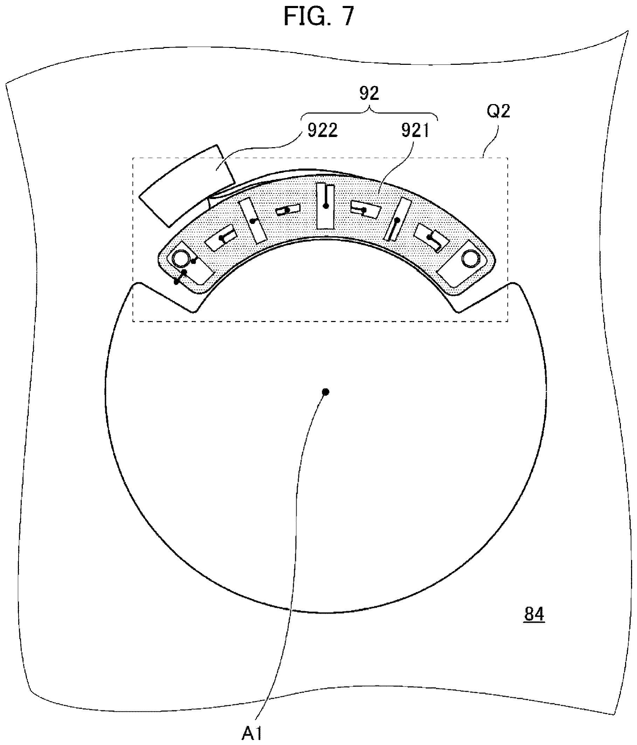

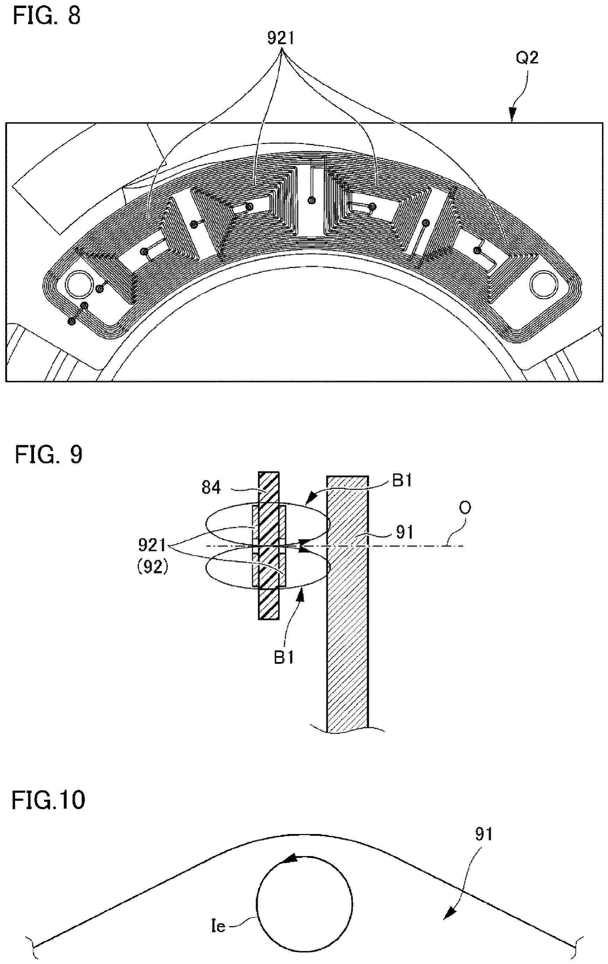

FIG. 5 is an enlarged view of a portion Q1 in FIG. 3. FIG. 6 is a diagram showing the relationship between the sensor rotor 91 and a sensing unit 92 on the control board 84 as viewed from the X2 side in the axial direction, and FIG. 7 is a diagram showing the state in which the sensor rotor 91 in FIG. 5 is removed, as viewed from the X2 side in the axial direction. FIG. 8 is an illustration of the configuration of a sensor coil 921, and is an enlarged view of a portion Q2 in FIG. 7.

The rotation angle sensor 900 includes the sensor rotor 91 and the sensing unit 92.

The sensor rotor 91 is a conductor and rotates with the rotor 310. As shown in FIG. 6, the sensor rotor 91 has an annular shape with a circular central hole 911 centered on the first axis A1. The sensor rotor 91 may be attached so as to rotate with the shaft portion 314 by passing the shaft portion 314 through the central hole 911 of the sensor rotor 91. For example, a radially recessed or protruding portion may be formed in the shaft portion 314, and a radially protruding or recessed portion that fits in or on the radially recessed or protruding portion of the shaft portion 314 may be formed in the inner peripheral edge of the central hole 911 of the sensor rotor 91.

The sensor rotor 91 has a periodically changing outer diameter. Therefore, the outer diameter of the sensor rotor 91 at a circumferential position facing the sensing unit 92 in the axial direction changes periodically every time the rotation angle of the rotor 310 changes by a predetermined angle. The predetermined angle may be determined as appropriate during design according to the number of magnetic poles etc. In the present embodiment, the sensor rotor 91 alternately has four radially protruding portions and four radially recessed portions along the entire circumference. In this case, the outer diameter of the sensor rotor 91 at the circumferential position facing the sensing unit 92 in the axial direction changes periodically every time the rotation angle of the rotor 310 changes by 90 degrees.

In a modification, the sensor rotor 91 may have a periodically changing thickness (axial thickness) instead of or in addition to the periodically changing outer diameter. In this case, the thickness of the sensor rotor 91 at the circumferential position facing the sensing unit 92 in the axial direction changes periodically every time the rotation angle of the rotor 310 changes by a predetermined angle.

The sensing unit 92 is mounted on the control board 84. This allows the wiring between the sensing unit 92 and the control device 500 to be easily implemented by the wiring in the control board 84, and can reduce the wiring length between the sensing unit 92 and the control device 500.

The sensing unit 92 is disposed so as to face and be close to the sensor rotor 91 in the axial direction. As shown in FIG. 4B, the control board 84 may have a circular arc shape as viewed in the axial direction, and the sensing unit 92 may extend only in a section of the entire circumference of the control board 84. In the present embodiment, the control board 84 has, in the peripheral edge portion of the central hole 84a, a protruding region 840 (FIG. 4B) protruding radially inward, and the sensing unit 92 (not shown in FIG. 4B, see FIG. 7 etc.) is mounted on the protruding region 840. The protruding region 840 forms part of the central hole 84a of the control board 84, and extends radially inward from the remaining circumferential portion as shown in FIG. 4B. This allows the sensing unit 92 to be located close to the shaft portion 314 in the radial direction, and can reduce the diameter of the sensor rotor 91. In a modification, the central hole 84a may be circular, and the sensing unit 92 may be formed around the circular central hole 84a.

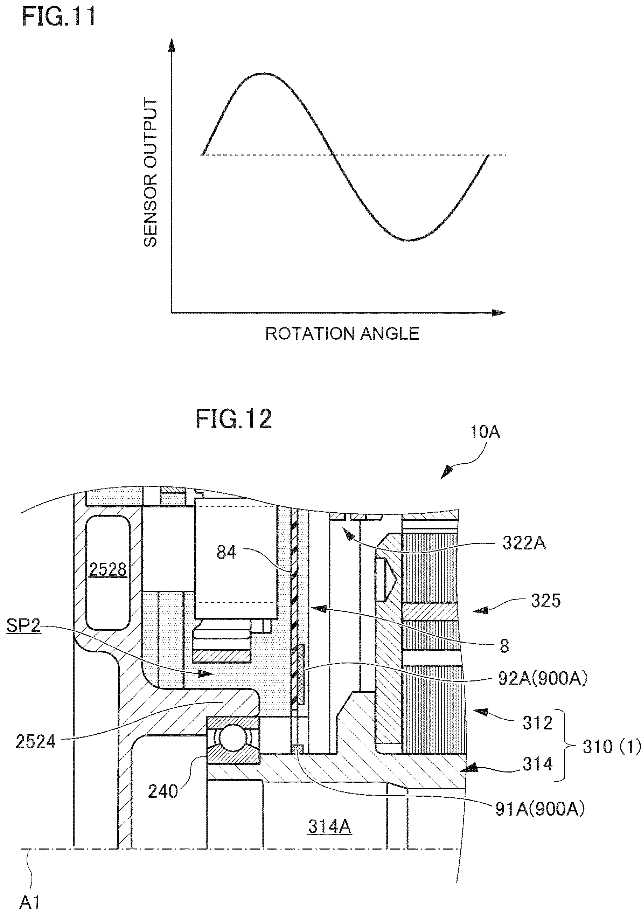

The sensing unit 92 detects the rotation angle of the rotor 310 using eddy currents. FIGS. 9 to 11 are illustrations of the principle of detection by the sensing unit 92. FIG. 9 is a diagram showing the relationship between the sensing unit 92 and the sensor rotor 91 of the rotation angle sensor 900, and FIG. 10 is a diagram of a portion of the sensor rotor 91 that faces the sensing unit 92 in the axial direction as viewed in the axial direction. FIG. 11 is a schematic diagram illustrating a waveform of a sensor output (electrical signal) generated by the sensing unit 92. In FIG. 11, a time-series waveform of the sensor output (electrical signal) generated by the sensing unit 92 is schematically shown, with the abscissa representing the rotation angle of the rotor 310 and the ordinate representing the magnitude of the sensor output. A time-series waveform for a predetermined rotation angle (90 degrees in the present embodiment) of the rotor 310 is schematically shown in FIG. 11.

As shown in FIGS. 6 to 8, the sensing unit 92 includes the sensor coil 921 and a processing circuit unit 922, as shown in FIGS. 6 to 8. The processing circuit unit 922 may be implemented by the microcomputer 502 described above. Part or all of the functions of the processing circuit unit 922 may be implemented by an external control device (not shown).

As shown in, for example, FIG. 9, the sensor coil 921 may be formed on both surfaces of the control board 84. In a modification, the sensor coil 921 may be formed on an inner layer of the control board 84 instead of or in addition to on the surfaces on both sides of the control board 84. The sensor coil 921 may be, for example, a printed conductor. The sensor coil 921 is wound around a central axis O parallel to the X direction.

A plurality of sensor coils 921 may be provided in the circumferential direction. For example, as shown in FIG. 8, four sets of sensor coils 921 may be arranged in the circumferential direction.

The processing circuit unit 922 generates eddy currents on the sensor rotor 91 by energizing the sensor coil 921. Specifically, as schematically shown in FIG. 9, when the sensor coil 921 is energized, magnetic flux B1 passing through the sensor coil 921 is generated. When the magnetic flux B1 passing through the sensor coil 921 touches the surface of the sensor rotor 91 that faces the sensor coil 921 in the axial direction, eddy currents are generated on the surface of the sensor rotor 91. In FIG. 10, the manner in which the eddy currents are generated is schematically shown by arrow Ie. Although the eddy currents in a specific direction are schematically shown in FIG. 10, the direction of the eddy currents is determined according to the direction of a current flowing through the sensor coil 921. The eddy currents are generated in such a direction that magnetic flux that reduces the magnetic flux B1 is generated. Therefore, magnetic flux B2 (not shown) that reduces the magnetic flux B1 is generated due to the eddy currents. The magnitude of the magnetic flux B2 is proportional to the magnitude of the eddy currents. The magnitude of the eddy currents increases as the surface area of the portion of the sensor rotor 91 that faces the sensor coil 921 in the axial direction increases. In the present embodiment, as described above, the sensor rotor 91 has a periodically changing outer diameter. Therefore, the surface area of the portion of the sensor rotor 91 that faces the sensor coil 921 in the axial direction changes as the rotation angle of the rotor 310 changes. More specifically, the surface area of the portion of the sensor rotor 91 that faces the sensor coil 921 in the axial direction changes sinusoidally as the rotation angle of the rotor 310 changes. Therefore, in the present embodiment, the time-series waveform of the sensor output (electrical signal) generated by the sensing unit 92 forms a sine wave of one cycle every time the rotation angle of the rotor 310 changes by 90 degrees, as shown in FIG. 11. Therefore, the rotation angle of the rotor 310 can be detected based on such a sensor output (electrical signal).

As described above, according to the present embodiment, the sensing unit 92 of the rotation angle sensor 900 is mounted on the control board 84 forming the control device 500. This can reduce the number of boards compared to the case where the sensing unit 92 is mounted on another board, so that an efficient configuration can be implemented. In particular, in the configuration in which the rotating electrical machine 1 and the block assemblies 89 are disposed in the motor housing chamber SP1 and the inverter housing chamber SP2 that communicate with each other (that is, the rotating electrical machine 1 and the block assemblies 89 are housed in a common housing chamber of the case 2), the space between the rotating electrical machine 1 and the block assemblies 89 in the axial direction tends to be a dead space. Therefore, the control board 84 and the rotation angle sensor 900 can be efficiently disposed using such a space that tends to be a dead space.

According to the present embodiment, the sensor rotor 91 is provided on the shaft portion 314 at a position on the X2 side with respect to the axial end face on the X1 side of the shaft portion 314 (position on the X1 side with respect to the rotor core 312), and the control board 84 is provided on the X2 side with respect to the axial end face on the X1 side of the shaft portion 314. This can eliminate the need for a space for the rotation angle sensor 900 on the X1 side with respect to the axial end face on the X1 side of the shaft portion 314, unlike such a configuration as shown in Patent Document 1 mentioned above (configuration in which the detection target unit is provided on the axial end face of the shaft portion and the control board faces the axial end face). As a result, according to the present embodiment, it is possible to reduce the axial size of the vehicle drive device 10.

According to the present embodiment, as shown in FIG. 3, the rotation angle sensor 900 is disposed between the bearing 240 (or the bearing support portion 2524) and the rotating electrical machine 1 in the axial direction. Therefore, it is possible to implement efficient placement using the space that tends to be a dead space. As a result, it is possible to reduce the axial size of the vehicle drive device 10.

According to the present embodiment, since the rotation angle sensor 900 is formed using the sensor rotor 91 in the form of a flat plate, the rotation angle sensor 900 requires only a relatively small mounting space in the axial direction. Moreover, since the sensor rotor 91 itself can be formed inexpensively, reduction in cost can be achieved.

In the present embodiment, the sensor rotor 91 is disposed on the X2 side with respect to the control board 84 (and therefore the sensing unit 92). However, the sensor rotor 91 may be disposed on the X1 side with respect to the control board 84.

FIG. 12 is an illustration of a rotation angle sensor 900A according to a modification, and is a sectional view of part of a vehicle drive device 10A.

In this modification, a detection target unit 91A and a sensing unit 92A of the rotation angle sensor 900A face each other in the radial direction. For example, the detection target unit 91A overlaps the control board 84 as viewed in the radial direction. When a sensor element of the sensing unit 92A is a Hall element, the detection target unit 91A may be implemented by a permanent magnet provided on the outer peripheral portion of the shaft portion 314. In this case, the permanent magnet may be disposed so that the magnetic pole of the outer peripheral portion of the shaft portion 314 changes periodically in the circumferential direction, and a plurality of the sensor elements of the sensing unit 92A may be disposed at equal pitches about the first axis A1 so as to face the detection target unit 91A in the radial direction. The detection target unit 91A may be in the shape of a ring attached to the shaft portion 314, or may be formed integrally with the shaft portion 314.

Although the embodiments are described in detail above, the present disclosure is not limited to the specific embodiments, and various modifications and changes can be made within the scope of the claims. It is also possible to combine all or part of the constituent elements of the embodiments described above.

### Description of the Reference Numerals

10, 10A ... vehicle drive device, 1 ... rotating electrical machine, 2 ... case, 250 ... motor case (housing member), 252 ... cover member, 2524 ... bearing support portion (support portion), 310 ... rotor, 314 ... shaft portion, 320 ... stator, 84 ... control board, 84a ... central hole, 840 ... protruding region (region), 89 ... block assembly (inverter device), 900 ... rotation angle sensor, 91 ... sensor rotor (detection target unit), 91A ... detection target unit, 92, 92A... sensing portion, 921 ... sensor coil (coil), SP1 ... motor housing chamber (common housing chamber, SP2 ... inverter housing chamber (common housing chamber)

## Claims

1. A vehicle drive device comprising:
a rotating electrical machine including a rotor and a stator;
an inverter device electrically connected to the rotating electrical machine;
a control board configured to control the rotating electrical machine;
a rotation angle sensor configured to acquire information on rotation of the rotor; and
a case that houses the rotating electrical machine, the inverter device, and the control board in a common housing chamber, wherein
the rotation angle sensor includes a sensing unit mounted on the control board and a detection target unit provided on a shaft portion of the rotor.

2. The vehicle drive device according to claim 1, wherein
the case includes a support portion that rotatably supports the rotor, and
the control board is disposed closer to the rotating electrical machine than the support portion in an axial direction.

3. The vehicle drive device according to claim 1 or 2, wherein
the control board has a central hole through which the shaft portion passes.

4. The vehicle drive device according to claim 3, wherein
a peripheral edge portion of the central hole of the control board includes a region protruding radially inward, and
at least part of the sensing unit is provided on the region.

5. The vehicle drive device according to any one of claims 1 to 4, wherein
the detection target unit includes a sensor rotor that rotates with the rotor,
the sensing unit includes a coil, and
the coil is disposed so as to face at least part of the sensor rotor in the axial direction.

6. The vehicle drive device according to any one of claims 1 to 5, wherein
the control board is disposed closer to the rotating electrical machine than the inverter device in the axial direction, and overlaps the inverter device as viewed in the axial direction.
